# DEMANDE DE BREVET EUROPEEN

(11) **EP 2 448 180 A1**
(43) Date de publication de la demande: **02.05.2012**
(21) Numéro de dépôt: 11185703.3
(22) Date de dépôt: 19.10.2011
(51) Int. Cl.: H04L 12/28, H04L 12/46, H04L 12/56, H04N 7/24

(54) **Procédé et dispositif d'identification d'au moins un flux IP cible a l'interieur d'un flux de transport transmis par satellite**

(30) Priorité: 27.10.2010 FR 1058864
(71) Demandeur: Eutelsat S.A., 75015 Paris (FR)
(72) Inventeur: Arcidiacono, Antonio, 75016 Paris (FR); Finocchiaro, Daniele Vito, 75015 Paris (FR); Grazzini, Sébastien, 75015 Paris (FR)
(74) Mandataire: Lebkiri, Alexandre

(57) **Abrégé**

L'invention concerne un procédé d'identification d'au moins un flux IP cible à l'intérieur d'un flux de transport initial (1) transmis par satellite (3), le flux IP cible étant caractérisé par l'effet des données qu'il contient sur un appareil test (3), le procédé comportant les étapes suivantes :
- Modification de certains flux IP du flux de transport initial ;
- Formation d'un flux de transport modifié à partir des flux IP modifié et des autres flux IP du flux de transport initial,
- Envoi du flux de transport modifié (11) à l'appareil test (3),
- Observation de l'effet de l'envoi du flux de transport modifié sur l'appareil test (3),
- Réitération des étapes précédentes en modifiant d'autres flux IP jusqu'à l'identification du ou des flux IP cible(s).

## Description

### DOMAINE TECHNIQUE DE L'INVENTION

La présente invention concerne la transmission de données par satellite, et plus particulièrement la transmission de paquets de type IP (Internet Protocole) à l'intérieur de services de diffusion de type DVB (Digital Video Broadcasting), comme par exemple le service DVB-S (diffusion par satellite). La description du protocole IP est contenue dans la RFC 791 (« request for comments » maintenu par l'IETF ou « Internet Engineering Task Force »). Le protocole DVB-DATA, qui spécifie l'envoi de flux IP à l'intérieur d'un service DVB à travers d'un mécanisme nommé « MPE » (Multi Protocol Encapsulation), est contenu dans les documents ETSI EN 301 192 « DVB specifications for data broadcasting ». Les spécifications des services DVB sont disponibles sur le site Internet www.dvb.org ainsi que comme publications ETSI. Par exemple les spécifications du DVB-S, relatif particulièrement aux transmissions par satellites, sont contenues dans le document ETSI EN 300 421 « Framing structure, channel coding and modulation for 11/12 GHz satellite services ». Les spécifications du multiplexage de plusieurs services à l'intérieur d'un seul flux DVB sont contenues dans le document ETSI EN 300 468 « Specifications for Service Information in DVB systems ».

La présente invention concerne plus particulièrement un procédé et un dispositif d'identification d'au moins un flux IP cible, contenu à l'intérieur d'un flux de transport DVB, qui déclenche une réaction sur un appareil de test donné.

### ETAT DE LA TECHNIQUE ANTERIEUR

L'utilisation de réseaux IP pour transmettre des services DVB par satellite a permis de démocratiser la transmission de données par satellite. En effet, les opérateurs satellites peuvent transmettre un flux de transport (dit flux MPEG-TS) qui comporte plusieurs flux élémentaires dits « services », parmi lesquels il peut y avoir des flux partagés qui comportent plusieurs flux IP, envoyés par des clients différents. Chaque client n'a donc pas besoin de louer la totalité du flux de transport, ou une quantité fixe de bande passante, mais il peut accéder de façon partagée à un service IP, et y envoyer des données, en mutualisant les coûts. Ainsi, des petits clients, par exemple des petites entreprises, peuvent transmettre de petites quantités d'information par satellite en louant seulement un flux IP à l'intérieur d'un flux de transport transmis par satellite et partagé par plusieurs clients. Ces données, dans le cas du satellite, sont reçues par un large nombre d'utilisateurs, grâce à des appareils de réception.

Selon le type de service, un appareil de réception peut filtrer une partie du flux de transport qui lui est particulièrement adressé. Une application de ce système permet par exemple d'offrir un accès à Internet par satellite à des particuliers ou des petites entreprises. Dans le cas du système de la norme DVB-RCS (ETSI EN 301 790) par exemple, un terminal communique avec un concentrateur ou « hub » qui lui donne accès à Internet. Les communications du terminal vers le concentrateur ou « hub » passent par un lien satellitaire dédié, pendant que les communications du concentrateur ou « hub » vers le terminal, qui proviennent de l'Internet, passent par le lien satellitaire partagé (broadcast) en DVB-S, et sont ensuite filtrées par chaque terminal. Dans d'autres systèmes d'accès Internet à moindre coût, les communications du terminal vers le concentrateur ou « hub » passent par un lien terrestre, comme une ligne téléphonique ou un réseau cellulaire, mais comme dans le cas précédent les données provenant de l'Internet passent par un lien satellitaire partagé.

Toutefois, cette démocratisation de la transmission de données par satellite a eu pour conséquence de rendre plus difficile pour les opérateurs satellites de contrôler la nature et la finalité des données transmises par leurs satellites.

Par exemple, puisque dans un système DVB-RCS les données destinées à un terminal sont en fait reçues par tous les terminaux, puis filtrées, un utilisateur malveillant peut développer un terminal qui ne filtre pas les données reçues, et qui donc peut écouter tout le trafic présent dans le flux, y compris celui destiné aux autres utilisateurs. En déployant à large échelle des terminaux ainsi conçus, un utilisateur malveillant peut mettre en place un système de diffusion à moindre coût, et sans détenir les licences nécessaires. Ce système de diffusion, caché à l'intérieur d'un service d'accès à Internet, peut servir pour diffuser des données illicites telles que des clés de cryptage destinées à décoder des chaînes TV cryptées sans abonnement.

En effet, lorsque l'opérateur satellite transmet des flux de données en provenance de l'Internet, il lui est difficile de savoir les données qui contiennent ces flux de données, et il lui est également difficile de savoir quelles parties du flux de données contiennent quelles données. Or, il peut être utile pour un opérateur de savoir quelles sont les parties du flux de données qui contiennent certaines données précises, ou qui génèrent une réaction spécifique sur un récepteur particulier, pour pouvoir éventuellement agir sur eux ou sur leur sources.

### EXPOSE DE L'INVENTION

L'invention vise à proposer un procédé permettant d'identifier, dans un flux de transport transmis par satellite, quel(s) est(sont) le ou les flux IP qui transporte(nt) des données dont on connaît l'effet sur un appareil test.

Dans ce document, on appelle flux IP une séquence de paquets IP qui partagent tous la même adresse source IP et la même adresse destination IP.

Un autre objet de l'invention est de proposer un dispositif qui permet d'identifier, dans un flux de transport transmis par satellite, quel(s) est(sont) le ou les flux IP qui transporte(nt) des données dont on connaît l'effet sur un appareil test.

Pour ce faire, est proposé selon un premier aspect de l'invention un procédé d'identification d'au moins un flux IP cible à l'intérieur d'un flux de transport initial transmis par satellite, le flux de transport initial comportant plusieurs flux IP, le flux IP cible étant caractérisé par l'effet des données qu'il contient sur un appareil test, le procédé comportant les étapes suivantes :
- (a) Modification d'au moins un flux IP du flux de transport initial, les autres flux IP du flux de transport initial étant inchangés ;
- (b) Formation d'un flux de transport modifié à partir du ou des flux IP modifié(s) et des autres flux IP du flux de transport initial,
- (c) Envoi du flux de transport modifié à l'appareil test,
- (d) Observation de l'effet de l'envoi du flux de transport modifié sur l'appareil test,
- (e) Réitération des étapes (a) à (d) en modifiant d'autres flux IP du flux de transport initial jusqu'à l'identification du flux IP cible.

Dans ce document, un flux élémentaire peut également être appelé un service.

Ainsi, le procédé selon l'invention propose de modifier le flux de transport initial qui est transmis par le satellite, et plus précisément, de laisser passer certains flux IP du flux de transport inchangés, tandis que d'autres flux IP sont modifiés c'est-à-dire corrompus ou effacés. On envoie ensuite un flux de transport reconstitué à partir de ces flux IP inchangés et ces flux IP corrompus à l'appareil test, et on observe l'effet de l'envoi du flux de transport modifié sur l'appareil test.

Si l'effet des données cibles est observé sur l'appareil test suite à l'envoi du flux de transport modifié, cela signifie que parmi les flux IP qui n'ont pas été modifiés, certains au moins contiennent les données cibles.

Si l'effet des données cibles n'est pas observé sur l'appareil test suite à l'envoi du flux de transport modifié, cela signifie qu'aucun des flux IP qui n'ont pas été modifiés ne contient les données cibles. Les flux IP qui n'ont pas été modifiés peuvent donc être enlevés du groupe de flux IP dans lequel on recherche le ou les flux IP qui contiennent les données cibles.

Par ailleurs, si lors d'une première étape (d), l'effet des données cibles était observé et que suite à une modification de certains flux IP, l'effet des données cibles n'est plus observé lors d'une deuxième étape (d), cela signifie qu'un des flux IP qui a été modifié contenait les données cibles.

On peut ainsi restreindre de proche en proche le groupe de flux IP dans lequel on recherche le ou les flux IP qui contiennent les données cibles, jusqu'à isoler tous les flux IP qui contiennent les données cibles.

Les étapes du procédé sont donc réitérées en choisissant à chaque fois des flux IP à modifier qui sont différents et en mémorisant à chaque fois si l'effet des données cibles a été observé ou non sur l'appareil test.

Le procédé selon l'invention comprend donc une étape de mémorisation de l'effet de l'envoi du flux de transport modifié sur l'appareil cible, suite à chaque étape (d).

Lorsque l'effet des données cibles n'est pas observé sur l'appareil cible suite à l'envoi des flux IP inchangés et des flux IP corrompus, mais que l'effet était observé en utilisant le flux original, cela signifie que les données étaient contenues dans les flux IP modifiés. En restreignant à chaque étape (a), le groupe de flux IP à analyser, on peut identifier au moins un flux IP qui contient les données cibles. Dans ce cas :
- soit le procédé s'arrête, puisqu'il a identifié le flux IP qui contenait les données. Ce mode de réalisation est utilisé lorsque les données cibles sont contenues dans un seul flux IP ;
- soit le procédé continue, afin de vérifier si les données cibles ne sont pas aussi contenues dans d'autres flux IP. En effet, les données cibles peuvent être contenues dans plusieurs flux IP. Dans ce cas, il est nécessaire de poursuivre le procédé jusqu'à ce que l'on ait sondé tous les flux IP.

Avantageusement, le flux de transport modifié est codifié dans le même format que le flux de transport initial, c'est-à-dire que le flux de transport modifié présente les mêmes caractéristiques de multiplexage, codage, modulation et fréquence que le flux de transport initial. De cette manière, le fait que certains flux IP aient été modifiés lors de l'étape (a) est indétectable par l'appareil test. En effet, si l'appareil test détecte des anomalies dans le flux de transport reçu, il pourrait se mettre « hors service », et ne pas réagir à la présence des données cibles, rendant impossible l'identification des flux IP qui les contiennent.

Selon un mode de réalisation, le flux de transport initial comporte plusieurs flux élémentaires dits « services » dans lesquels sont répartis les flux IP. Dans ce cas, le procédé est de préférence tel que:
- (i) les étapes (a) à (e) sont d'abord utilisées en choisissant, à chaque étape (a), un groupe de flux IP à modifier qui correspond à un des flux élémentaires jusqu'à l'identification du flux élémentaire dans lequel se trouve le flux IP cible ;
- (ii) les étapes (a) à (e) sont ensuite utilisées en choisissant, à chaque étape (a), un groupe de flux IP à modifier qui correspond à un ou plusieurs flux IP du flux élémentaire identifié lors de l'étape (i) jusqu'à l'identification du flux IP cible.

Selon ce mode de réalisation, on identifie d'abord dans quel flux élémentaire est contenu le flux IP cible, puis on recherche, à l'intérieur de ce flux élémentaire uniquement, quel est le flux IP cible. Dans ce mode de réalisation, les flux IP à modifier lors de l'étape (a) sont choisis en fonction du flux élémentaire auquel ils appartiennent. Les flux IP appartenant au même flux élémentaire sont identifiés par leur « PID » (Packet Identifier), écrit dans la partie « entête » de chaque paquet MPEG-TS.

Selon un autre mode de réalisation, le flux de transport initial peut être sondé par dichotomie. Dans ce cas, lors de la première étape (a), le groupe de flux IP à modifier peut être choisi comme étant égal à la moitié des flux IP du flux de transport initial. Si les données cibles sont identifiées comme appartenant à cette moitié des flux IP, lors de la deuxième étape (a), le groupe de flux IP à modifier est choisi comme étant égal à la moitié du groupe de flux IP à modifier choisi lors de la première étape, et ainsi de suite, jusqu'à l'identification du ou des flux IP qui contiennent les données cibles. Ce mode de réalisation est particulièrement bien adapté lorsque les données cibles ne sont contenues que dans un seul, ou dans un nombre limité de flux IP.

Selon un autre mode de réalisation, lors de chaque étape (a), tous les paquets sauf ceux d'un seul flux IP sont modifiés. Dans ce cas, tous les flux IP sont testés un par un, les uns après les autres. Ce mode de réalisation est particulièrement bien adapté au cas où les données cibles sont contenues dans plusieurs flux IP.

L'étape de modification de certains flux IP peut prendre différentes formes.

Selon un premier mode de réalisation, l'étape (a) de modification d'au moins un flux IP est une étape de suppression de tous les paquets IP appartenant à ce ou ces flux IP.

Dans ce cas, le procédé selon l'invention comporte de préférence, préalablement à l'étape (a), une étape de décapsulation de tous les paquets IP contenus dans le flux de transport initial, l'étape (b) étant une étape d'encapsulation de tous les paquets IP restants pour former un flux de transport modifié.

Selon ce mode de réalisation, tous les paquets IP contenus dans le flux de transport initial sont donc décapsulés, puis certains d'entre eux sont supprimés. Les paquets IP restants sont alors encapsulés pour former un flux de transport modifié. Le flux de transport modifié est ensuite remodulé, de façon à ce qu'il ait un format identique au format du flux de transport initial. Le flux de transport modifié modulé est transposé à la bonne fréquence, et est ensuite envoyé à l'appareil test.

Selon un autre mode de réalisation, l'étape (a) de modification d'au moins un flux IP est une étape de modification des données contenues dans ce ou ces flux IP. Ce mode de réalisation peut être préférable au précédent dans certains cas, car de cette façon les modifications effectuées sur le ou les flux IP sont moins détectables pour l'appareil test, car certains paramètres statistiques comme le débit binaire ou *« bitrate »* ne sont pas modifiés.

Dans ce cas, l'étape (b) comporte de préférence une étape de re-calcul des sommes de contrôle des flux IP et des paquets MPEG-TS du flux de transport initial pour former un flux de transport modifié correspondant aux normes DVB.

Selon un mode de réalisation, le procédé comprend, préalablement à l'étape (a) une étape de réception du flux de transport initial issu du satellite. Dans ce cas, préalablement à chaque étape (a), le procédé comprend de préférence une étape de réception du flux de transport issu du satellite, et c'est à partir de ce flux de transport reçu que le flux de transport modifié est obtenu.

Le flux de transport initial est de préférence envoyé à un premier appareil test sans avoir été modifié de façon à vérifier que ce flux de transport initial comporte les données cibles. En parallèle, un flux de transport modifié obtenu à partir de ce flux de transport initial est envoyé à un deuxième appareil test de façon à comparer si l'effet des données cibles est également obtenu après modification de certains flux IP.

Selon un autre mode de réalisation, le procédé comprend, préalablement à l'étape (a):
- une étape de démodulation d'un flux de transport initial issu du satellite ;
- une étape d'enregistrement de ce flux de transport initial.

Dans ce mode de réalisation, préalablement à la première étape (a), le flux de transport initial issu du satellite est enregistré, puis ce même flux de transport est réutilisé jusqu'à l'identification du ou des flux IP cible(s).

Dans ce mode de réalisation, le flux de transport initial est d'abord envoyé à l'appareil test sans modification de façon à vérifier que ce flux de transport initial comporte les données cibles. Ensuite, certains flux IP du flux de transport initial sont modifiés, et le flux de transport modifié obtenu est envoyé à l'appareil test de façon à comparer si l'effet des données cibles est également obtenu après modification de certains flux IP.

Selon un mode de réalisation, les données du ou des flux IP cible(s) permettent à l'appareil test de lire un flux de données principal, le procédé comportant en outre, simultanément à l'étape (c), une étape d'envoi du flux de données principal à l'appareil test. Dans le cas où le flux de transport contenant les flux IP a été enregistré, le flux de données principal est aussi enregistré de façon synchrone, et réutilisé ensuite.

Selon un mode de réalisation, les données du ou des flux IP cible(s) permettent à un deuxième appareil, relié à l'appareil test, de lire un flux de données principal, le procédé comportant en outre, simultanément à l'étape (c), une étape d'envoi du flux de données principal au deuxième appareil, et à l'étape (d) l'observation de l'effet obtenu sur le deuxième appareil. Dans le cas où le flux de transport contenant les flux IP a été enregistré, le flux de données principal est aussi enregistré de façon synchrone, et réutilisé ensuite.

Dans le cas où les données du ou des flux IP cible(s) permettent à l'appareil test de lire un flux de données principal, l'effet des données sur l'appareil test est donc de permettre à l'appareil test de lire les données du flux de données principal. Ainsi, si on corrompt un flux IP et que suite à cette corruption, l'appareil test ne peut plus lire les données sur flux de données principal, cela signifie que le flux IP corrompu contenait les données cibles. Par contre, si on corrompt un flux IP et que suite à cette corruption, l'appareil test peut toujours lire les données du flux de données principal, cela signifie que les données cibles sont toujours présentes dans les flux IP inchangés. Ainsi, si suite à la corruption d'un flux IP, l'effet des données n'est pas obtenu sur l'appareil test alors qu'avant la modification de ce flux IP l'effet des données était obtenu, cela signifie que le flux IP contenait les données cibles permettant d'obtenir l'effet sur l'appareil cible. Par contre si suite à la corruption d'un flux IP, l'effet des données est toujours obtenu, cela signifie que les flux IP inchangés contiennent les données cibles.

L'invention concerne également un dispositif pour la mise en oeuvre du procédé selon l'invention.

Avantageusement, ce dispositif comporte les éléments suivants :
- Des moyens de réception du flux de transport initial ;
- Des moyens d'identification des différents flux IP dans le flux de transport initial ;
- Des moyens de modification aptes à modifier au moins un flux IP du flux de transport initial ;
- Des moyens de formation d'un flux de transport modifié à partir des flux IP inchangés et des flux IP corrompus ;
- Un appareil test ;
- Des moyens d'envoi du flux de transport modifié et modulé à la bonne fréquence à l'appareil test ;
- Des moyens d'analyse aptes à détecter l'effet des données cibles sur l'appareil test et à choisir le ou les flux IP du groupe de flux IP à modifier en fonction de la détection ou de la non détection de l'effet sur l'appareil test.

Avantageusement, les moyens d'analyse sont reliés à l'appareil test de façon à pouvoir détecter si l'effet des données cibles est obtenu ou non sur l'appareil test.

Selon un mode de réalisation, l'appareil test est un dispositif de lecture permettant d'obtenir un signal vidéo à partir d'un flux de données principal grâce aux données cibles. Ainsi, lorsque l'appareil test reçoit les données cibles, il peut produire un signal vidéo à partir du flux de données principal. Par contre, en l'absence de données cibles, l'appareil test ne peut pas obtenir de signal vidéo à partir du flux de données principal, et il génère une image fixe en sortie (par exemple un écran noir ou un écran d'erreur).

Dans ce cas, les moyens d'analyse comportent de préférence des moyens d'acquisition du signal en sortie du dispositif de lecture, ainsi que des moyens de traitement du signal en sortie du dispositif de lecture, les moyens de traitement étant aptes à détecter si le signal en sortie du dispositif de lecture est une image fixe ou une image en mouvement. Lorsque le signal en sortie du dispositif de lecture est une image fixe, les moyens d'analyse en déduisent que le dispositif de lecture n'a pas pu obtenir un signal vidéo à partir du flux de données principal et donc que l'effet des données cibles n'est pas obtenu. Lorsque le signal vidéo est une image en mouvement, les moyens d'analyse en déduisent que l'effet des données cibles est obtenu. Pour un dispositif de lecture particulier, les moyens d'analyse peuvent être spécialisés pour reconnaitre le signal vidéo correspondant à un écran d'erreur du dispositif.

Avantageusement, les moyens de réception du flux de transport initial comportent une antenne parabolique.

Avantageusement, les moyens d'identification des différents flux IP dans le flux de transport initial comportent un récepteur DVB-S.

Avantageusement, les moyens de modification et les moyens d'analyse sont constitués par un seul et même analyseur DVB.

Avantageusement, les moyens de formation d'un flux de transport modifié et les moyens d'envoi de ce flux comportent un modulateur DVB-S. Les moyens de formation d'un flux de transport modifié et les moyens d'envoi de ce flux peuvent également comporter un encapsulateur DVB.

### BREVE DESCRIPTION DES FIGURES

D'autres caractéristiques et avantages de l'invention ressortiront à la lecture de la description qui suit, en référence aux figures annexées qui illustrent :

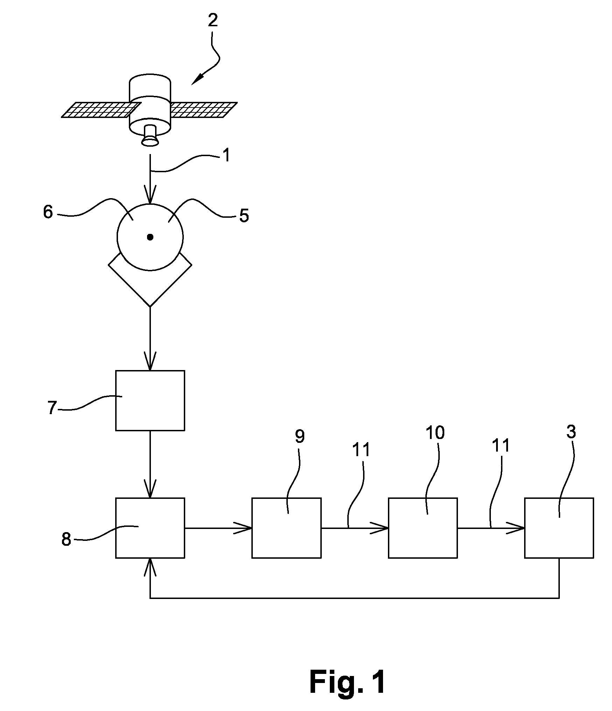

- la figure 1, un dispositif selon un mode de réalisation de l'invention.

### DESCRIPTION DETAILLEE D'AU MOINS UN MODE DE REALISATION

La figure 1 représente un dispositif d'identification d'un ou de plusieurs flux IP cible(s) à l'intérieur d'un flux de transport initial transmis par satellite 1.

Un satellite 2 envoie un flux de transport 1. Ce flux de transport comporte une suite de paquets MPEG regroupés en plusieurs flux élémentaires. Chaque flux élémentaire est identifié par un numéro unique appelé le PID ou « Packet Identifier » ou « identifiant de paquet ». Certains flux élémentaires comportent plusieurs flux IP. Chaque flux IP est identifié par une adresse IP source et une adresse IP destination. Un flux IP est constitué par tous les paquets IP avec la même adresse IP source et la même adresse IP destination. Dans le cas présent, un des flux IP, appelé flux IP cible, du flux de transport est porteur de données cibles permettant de faire fonctionner un appareil test 3. Le procédé selon l'invention est également applicable au cas où les données cibles sont contenues dans plusieurs flux IP cibles, y compris dans le cas où des données cibles identiques sont contenues dans plusieurs flux IP.

L'opérateur satellite sait que son satellite transmet ces données cibles, mais il ne sait pas quel client transmet ces données cibles et par conséquent, il ne sait pas quelle partie du flux de transport contient ces données cibles. Plus précisément, l'opérateur souhaiterait connaître quel flux IP est porteur de ces données cibles. Le dispositif selon l'invention va permettre de savoir quel flux IP est porteur de ces données cibles, et donc d'identifier la source de ces données.

Pour cela, le dispositif comporte des moyens de réception 5 du flux de transport initial transmis par satellite. Ces moyens de réception 5 sont constitués ici par une antenne parabolique 6 et son récepteur LNB (Low Noise Block converter).

Le dispositif comporte également un récepteur DVB-S 7. Ce récepteur 7 permet de démoduler le signal, le décapsuler et décomposer le flux de transport initial en flux IP.

Le dispositif comporte également un analyseur 8 du flux de transport apte à déterminer un groupe de flux IP à modifier et un groupe de flux IP à garder inchangé parmi les flux IP qui composent le flux de transport initial. L'analyseur 8 est également apte à modifier les flux IP du groupe de flux IP à modifier. Plus précisément, dans le cas présent, l'analyseur 8 est apte à filtrer les flux IP à modifier, c'est-à-dire à les supprimer.

Le dispositif comporte également un encapsulateur DVB 9 apte à reformer un flux de transport modifié à partir des flux IP restants.

Le dispositif comporte également un modulateur 10 apte à moduler le flux de transport modifié 11 de façon à ce qu'il ait le même format que le flux de transport initial 1. Le modulateur 10 est également apte à envoyer le flux de transport modifié à un appareil test 3 à la même fréquence que le signal que l'appareil test aurait reçu s'il était directement connecté aux moyens de réception 5.

Un procédé selon l'invention, mis en oeuvre par le dispositif de la figure 1 va maintenant être décrit.

L'antenne parabolique 6 intercepte le flux de transport initial 1 qui est transmis par le satellite. Le récepteur DVB-S décapsule ensuite le flux de transport initial 1 de manière à séparer les différents flux IP les uns des autres.

L'analyseur 8 modifie certains flux IP du flux de transport initial. La modification de certains flux IP peut consister à supprimer ou à corrompre ces flux IP.

L'encapsulateur DVB 9 reforme ensuite un flux de transport modifié à partir des flux IP restants.

Le modulateur DVB-S 10 remodule ensuite le flux de transport modifié de façon à ce qu'il présente le même format que celui que l'appareil test aurait reçu si aucune modification n'avait été effectuée sur le flux de transport initial. Le flux de transport modifié est ensuite envoyé à l'appareil test.

Si l'effet des données recherchées est obtenu sur l'appareil test 3 suite à l'envoi du flux de transport modifié, on en déduit que les données recherchées sont contenues dans le groupe de flux IP inchangés, et on n'apprend aucune information sur le groupe de flux IP modifié. Dans ce cas, on réitère le procédé, en choisissant comme nouveaux groupes de flux IP à supprimer, en quatre étapes, les deux moitiés des flux IP qui étaient restés inchangés ainsi que les deux moitiés des flux IP qui avaient été supprimés lors de l'étape précédente.

Au contraire, si l'effet des données recherchées n'est pas obtenu sur l'appareil test 3 suite à l'envoi du flux de transport modifié (on observe alors par exemple le non fonctionnement de l'appareil test), on en déduit que les données recherchées ne sont pas contenues dans le groupe de flux IP inchangés, et donc elles étaient contenues dans le groupe de flux IP qui a été supprimé. Dans ce cas, on réitère le procédé, en choisissant comme nouveau groupe de flux IP à supprimer d'abord une moitié des flux IP qui avaient été supprimés lors de l'étape précédente, et ensuite l'autre moitié.

Le procédé est réitéré jusqu'à ce qu'on identifie, par exemple par dichotomie, le flux IP cible.

Une fois le flux IP cible identifié, le procédé comprend une étape d'identification des adresses IP source et IP destination de ce flux IP. Le dispositif peut également comprendre une interface utilisateur sur laquelle les adresses IP sources et IP destination du flux IP identifié sont affichées.

Des courts-extraits de pseudo-code implémentant un procédé selon un mode de réalisation de l'invention sont donnés ci-après à titre illustratif.

Le procédé peut comprendre un point d'entrée dans l'algorithme :
*Algorithm main(input T : MPEG-TS stream)*
*Outputs list of stream containing target data*
   *1. if Test(T, empty set) = FALSE then Output 'No target IP stream present!'*
   *2.* C = *{set of all IP streams present in T}*
   *3. Search(T, C)* // *use one of the possible implementations*

Ensuite, différentes stratégies peuvent être utilisées par le procédé selon l'invention pour rechercher le ou les flux IP cible(s) dans le flux de transport initial.

Ainsi, selon un mode de réalisation, les flux IP peuvent être testés les uns après les autres, chaque test donnant des informations sur les flux qui peuvent être ignorés (parce que ils ne contiennent pas le flux IP cible) et ceux qui doivent être analysés plus en détail. Pour cela, les flux IP du flux de transport initial sont décapsulés. Puis, lors d'une étape (a), certains flux IP du flux de transport initial sont supprimés ou corrompus. Suite à chaque suppression ou corruption de certains flux IP, un flux de transport modifié est reformé à partir des flux IP restants. Le flux de transport modifié est ensuite envoyé à l'appareil test et les effets de ce flux de transport modifié sont observés. Les étapes ci-dessus sont réitérées en modifiant à chaque fois, suivant une stratégie, le ou les flux IP du flux de transport initial qui est (sont) supprimé(s) ou corrompu(s) jusqu'à ce que le ou les flux IP cible(s) soi(en)t identifié(s). Afin de décrire les différentes stratégies, on définit d'abord une fonction qui implémente la corruption d'un ensemble donné de flux IP à l'intérieur d'un flux de transport, et l'envoi du nouveau flux de transport modifié à l'appareil de test, et donne en sortie le résultat de ce test :
// *Basic routine to test stream with corrupted*/*deleted streams*
*Function Test(input T: MPEG-TS stream, X : set of IP streams to corrupt or delete)*
*Returns TRUE if target data are present in the streams T-X*
   *1. Corrupt or delete from T all IP packets which belong to a stream in X, obtaining T'*
   *2. Recompute checksums in T' so that T' is compliant with DVB standard*
   *3. Modulate T' and feed it into the test receiver*
   *4. If the receiver reacts to T' then return TRUE, else return FALSE*

Selon un mode de réalisation, une stratégie pour choisir les flux IP à tester est la suivante : à chaque étape (a), on sélectionne successivement les deux moitiés de l'espace de recherche (constitué par les 32 bits d'adresse IP source et les 32 bits d'adresse IP destination), c'est-à-dire que l'on sélectionne d'abord tous les flux IP où le bit de l'adresse IP à une certaine position est à 0, et ensuite tous les flux IP où ce bit est à 1. Pour chacun des deux ensembles, si le résultat du test est positif (c'est-à-dire que l'effet des données cibles est obtenu), il faut encore chercher à l'intérieur de l'ensemble des flux qui n'ont pas été modifiés ; si le résultat est négatif, on peut exclure les flux IP qui n'ont pas été modifiés de toute recherche ultérieure. En avançant la position du bit testé à chaque étape, en 64 étapes (correspondants aux 64 bits d'adresse IP source et destination) tout l'espace de recherche aura été analysé :
// *Performs 64 recursive steps (each IP address being coded in 32 bits)*
*Function Search_Recursive_Bits(*
*input T : MPEG-TS stream,*
*A : set of IP streams to look into,*
*i : recursion index defaults to 0) implements Search*
   *1. if* |*A*| *=1 then Output 'Target IP stream :'+getElement(A)*
   *2. if ( i<32 )*
*Let B = {subset of A containing streams where i-th bit of source IP address is equal to 0}*
*Else*
*Let B = {subset of A containing streams where (i-32)-th bit of destination IP address is equal to 0}*
   *3. if Test(T, B) = TRUE then Search_Recursive_Bits(T, A-B, i+1)*
   *4. if Test(T, A-B) = TRUE then Search_Recursive_Bits(T, B, i+1)*

Selon un autre mode de réalisation, on procède par dichotomie pour sélectionner les flux IP à modifier lors de chaque étape (a). On teste d'abord une moitié des flux IP présents, choisis au hasard, et ensuite l'autre moitié :
// *Recursive search based on random choice to split streams*
*Function Search_Recursive_Random(*
*input T : MPEG-TS stream,*
*A : set of IP streams to look into) implements Search*
   *1. if* |*A*|*=1 then Output 'Target IP stream :'+getElement(A)*
   2. Choose *B* = *{random subset of A with approximately half size, i.e.* |*B*| *=*|*A*|/*2}*
   *3. if Test(T, B)* = *TRUE then Search_Recursive_Random(T, A-B)*
   *4. if Test(T, A-B) = TRUE then Search_Recursive_Random(T, B)*

Selon un autre mode de réalisation, à chaque étape (a), on sélectionne un seul flux IP différent. Ainsi, les différents flux IP sont testés les uns après les autres (le test corrompt ou efface tous les flux IP présents sauf un) :
// *Tests one stream after another*
*Function Search_Iterative(*
*input T : MPEG-TS stream,*
*A : set of IP streams to look into) implements Search*
   *1. for each stream S in A do :*
      *a. if Test(T, A-{S}) = TRUE then Output 'Target IP stream :'+S*

Naturellement, l'invention n'est pas limitée aux modes de réalisation décrits et d'autres variantes pourraient être envisagées sans sortir du cadre de l'invention. En particulier, on pourrait imaginer qu'au lieu de supprimer des flux IP, on modifie seulement les données qu'ils contiennent. Dans ce cas, le flux de transport initial n'a pas besoin d'être décapsulé en différents flux IP, mais il suffit d'identifier les différents flux IP à l'intérieur du flux de transport initial et de modifier les données de l'un ou plusieurs d'entre eux. L'encapsulateur DVB est alors superflu, pourvu que les sommes de contrôle ou « checksums » en anglais dans le flux de transport soient correctement recalculés. On pourrait également supprimer ou modifier les flux IP un par un ou deux par deux, au lieu de les supprimer ou de les modifier par moitié du nombre de flux IP total.

## Revendications

1. Procédé d'identification d'au moins un flux IP cible à l'intérieur d'un flux de transport initial (1) transmis par satellite (2), le flux de transport initial comportant plusieurs flux IP, le flux IP cible étant **caractérisé par** l'effet des données qu'il contient sur un appareil test (3), le procédé comportant les étapes suivantes :
- (a) Modification d'au moins un flux IP du flux de transport initial (1), les autres flux IP du flux de transport initial (1) étant inchangés ;
- (b) Formation d'un flux de transport modifié (11) à partir du ou des flux IP modifié(s) et des autres flux IP du flux de transport initial,
- (c) Envoi du flux de transport modifié (11) à l'appareil test (3),
- (d) Observation de l'effet de l'envoi du flux de transport modifié (11) sur l'appareil test (3),
- (e) Réitération des étapes (a) à (d) en modifiant d'autres flux IP du flux de transport initial jusqu'à l'identification du flux IP cible.

2. Procédé d'identification selon la revendication précédente, **caractérisé en ce qu'**il comprend en outre une étape d'identification des adresses IP sources et/ou IP destination du flux IP cible identifié.

3. Procédé d'identification selon l'une quelconques des revendications précédentes, dans lequel le flux de transport initial (1) comporte plusieurs flux élémentaires dans lesquels sont répartis les flux IP, le procédé étant **caractérisé en ce que**:
- (i) les étapes (a) à (e) sont d'abord utilisées en choisissant, à chaque étape (a), un groupe de flux IP à modifier qui correspond à un des flux élémentaires jusqu'à l'identification du flux élémentaire dans lequel se trouve le flux IP cible ;
- (ii) les étapes (a) à (e) sont ensuite utilisées en choisissant, à chaque étape (a), un groupe de flux IP à modifier qui correspond à un ou plusieurs flux IP du flux élémentaire identifié lors de l'étape (i) jusqu'à l'identification du flux IP cible.

4. Procédé d'identification selon l'une quelconque des revendications précédentes, **caractérisé en ce que** l'étape de modification d'au moins un flux IP consiste à supprimer tous les paquets IP appartenant à ce ou ces flux IP.

5. Procédé d'identification selon la revendication précédente, **caractérisé en ce qu'**il comporte, préalablement à l'étape (a), une étape de décapsulation de tous les paquets IP contenus dans le flux de transport initial, l'étape (b) étant une étape d'encapsulation des paquets IP restants pour former un flux de transport modifié.

6. Procédé d'identification selon l'une quelconque des revendications 1 à 3, **caractérisé en ce que** l'étape (a) est une étape de modification des données contenues dans le ou les flux IP modifié(s).

7. Procédé d'identification selon la revendication précédente, **caractérisé en ce que** l'étape (b) comporte une étape de re-calcul des sommes de contrôle du flux de transport initial pour former le flux de transport modifié.

8. Procédé d'identification selon l'une quelconque des revendications précédentes, **caractérisé en ce qu'**il comprend, préalablement à l'étape (a) une étape de réception du flux de transport initial (1) issu du satellite (2).

9. Procédé d'identification selon l'une quelconque des revendications précédentes, **caractérisé en ce qu'**il comprend, préalablement à l'étape (a) :
- une étape de démodulation d'un flux de transport initial (1) issu du satellite (2);
- une étape d'enregistrement de ce flux de transport initial (1).

10. Procédé d'identification selon l'une quelconque des revendications précédentes, **caractérisé en ce que** les données du ou des flux IP cible(s) permettent à l'appareil test de lire un flux de données principal, le procédé comportant en outre, simultanément à l'étape (c), une étape d'envoi du flux de données principal à l'appareil test.

11. Dispositif pour la mise en oeuvre du procédé selon l'une quelconque des revendications précédentes.

12. Dispositif selon la revendication précédente, **caractérisé en ce qu'**il comporte :
- Des moyens de réception (5) du flux de transport initial (1);
- Des moyens d'identification (7) des différents flux IP dans le flux de transport initial ;
- Des moyens de modification (8) aptes à modifier au moins un flux IP du flux de transport initial (1);
- Des moyens de formation (9, 10) d'un flux de transport modifié à partir des flux IP inchangé et du ou des flux IP modifiés ;
- Un appareil test (3);
- Des moyens d'envoi du flux de transport modifié et modulé à la bonne fréquence à l'appareil test ;
- Des moyens d'analyse aptes à détecter l'effet des données cibles sur l'appareil test et à choisir, lors de chaque étape (a), le ou les flux IP à modifier en fonction de la détection ou de la non détection de l'effet sur l'appareil test lors de la précédente étape (d).
